# EUROPEAN PATENT APPLICATION

(11) **EP 2 554 957 A1**
(43) Date of publication of application: **06.02.2013**
(21) Application number: 12179104.0
(22) Date of filing: 02.08.2012
(51) Int. Cl.: G01G 19/02, G01G 21/22

(54) **Weighbridge component**

(30) Priority: 03.08.2011 GB 201113342
(71) Applicant: Libra Weighing Machines Limited, Sheffield, S21 4EY (GB)
(72) Inventor: Seaton, Steve, Sheffield, South Yorkshire S21 4EY (GB)
(74) Representative: Franks & Co Limited

(57) **Abstract**

A component for a vehicle load monitoring apparatus is disclosed, which comprises at one member having first and second surfaces, each surface being for supporting one or more wheels of a vehicle to be weighed and configured to releasably accommodate means to determine a weight of a vehicle. The first and seconds surface are substantial and to one another. A vesicle monitoring apparatus incorporating at one such component and a method of using are also disclosed.

## Description

### Field of the Invention

The present invention relates to a vehicle load monitoring apparatus and, particularly, to a component for accommodating goods vehicles on a load monitoring apparatus.

### Background of the Invention

It is known to use a vehicle load monitoring apparatus for determining the weight of vehicles, particularly of goods transport vehicles such as tractors with articulated trailers, for checking their compliance with road safety regulations.

A weighbridge is a known type of vehicle load monitoring apparatus and, typically, is either a fixed or a mobile installation. A loaded vehicle is driven onto a surface of the weighbridge to a stop, and means to determine a weight of the vehicle, which are attached to the underside of the weighbridge surface, obtain a weight measure of the loaded vehicle. Weighbridge surfaces are either unitary or take the form of two parallel components disposed either side of a void, and traditionally have a substantially U - shaped section, Due to the weights involved and their frequency of use, hard - wearing components of weighbridges, particularly the surface onto which goods vesicles are driven, are traditionally made of steel or concrete.

Typical means for determining a weight of the vehicle are load cells, which are connected to a junction box by means of a signal cable. The junction box is connected to a weight indicator. A small voltage is sent to the loadcells, each of which includes a strain gauge. The flex of the strain gauge under load modifies the signal which returns to the weight indicator and the corresponding difference in voltage is measured by the weight indicator, whereby the weight measure is obtained and displayed and/or recorded.

Weighbriges are expensive to commission, as they are relatively large installations which require extensive calibration operations. The useful life of the weighbridge surface, subjected as it is to the weight and frequent passage of loaded vehicles, remains limited over time by its gradual wear, whereby it must eventually be replaced. This operation requires a new component to be cast or manufactured, then transported to and installed at the weighbridge location. The weighbridge then requires extensive calibration operations again.

A solution is therefore required for facilitating the replacement of a worn surface of a vehicle load monitoring apparatus.

### Summary of the Invention

The present invention facilitates the replacement a worn surface of a vehicle load monitoring apparatus, by providing a weighbridge component having two surfaces, each for supporting one or more wheels of a vehicle, and which are useable in alternance. When the first surface becomes worn to the extent of requiring its replacement, the component is turned over and its second surface is used instead of replacing the entire component.

According to a first aspect there of the present invention, there is therefore provided a component for a vehicle load monitoring apparatus comprising at least one elongate member having a first surface for supporting one or more wheels of a vehicle to be weighed and configured to releasably accommodate means to determine a weight of a vehicle, wherein the at least one elongate member has a second surface substantially parallel and opposed to the first surface, for supporting one or more wheels of a vehicle to be weighed and configured to releasably accommodate the means to determine a weight of a vehicle.

In an embodiment of the present invention, the elongate member is substantially oblong. This elongate member is preferably substantially hollow and may further comprise bracing structures, so disposed as to provide equal weight loading capacity for either surface and, optionally, equal weight distribution relative to the longitudinal and transversal axes of the component.

In an embodiment of the present invention, the means to determine a weight is a plurality of load cells connected to a weight measuring device. The component of this embodiment is preferably configured with a plurality of apertures, each for accommodating a respective load cell, wherein each load cell is releasably secured in the aperture with a fastener. More preferably still, the apertures are boltholes and each fastener is a bolt.

In an embodiment of the present invention, the component is further configured to releasably accommodate one or more safety barriers. For instance, each of the first and second surface may comprise a plurality of apertures adjacent the outer lateral side of the component, wherein each aperture is engaged, in use, by a protruding engagement member of a safety barrier or portion thereof.

Alternatively, or additionally, the component is further configured to releasably accommodate one or more wheel tracking aids. For instance, each of the first and second surface may comprise a plurality of apertures located between at least one lateral side of the component and the longitudinal axis of the surface, wherein each aperture is engaged, in use, by a protruding engagement member of a track member. Alternatively, each of the first and second surface may comprise at least one track member, for instance a substantially rectilinear beam - like member, located between at least one lateral side of the component and the longitudinal axis of the surface.

In an embodiment of the present invention, at least one of the first or second surface of the component has means to improve grip of the one or more wheels. For instance, each of the first and second surface may comprise a plurality of tread members arranged as a pattern across at least a portion of the surface.

The component is preferably made of a material selected from the group comprising steel, concrete, steer - reinforced concrete and composite materials.

The component is preferably for use with a static weighbridge or a mobile weighbridge. Accordingly, the component may be for use with a surface - mounted weighbridge, wherein one or more access ramps are connected at least one end of the component. Alternatively, the component may be for use with a pit - mounted weighbridge below or at ground level, and the component so arranged as to be substantially flush - mounted relative to the ground adjacent at least one end of the component.

According to a second aspect there of the present invention, there is provided a vehicle load monitoring apparatus comprising a component substantially as described hereabove.

According to a third aspect there of the present invention, there is provided a method of using a vehicle load monitoring apparatus, wherein the vehicle load monitoring apparatus comprises at least one elongate member substantially as described hereinabove, the method comprising the steps of disposing the component of the vehicle load monitoring apparatus so that its first surface may be driven onto by a succession of vehicles to be weighed, releasably accommodating the means to determine a weight of a vehicle in the second surface and, when a condition of the first surface renders it unsuitable for use, turning the component over so that its second surface may be driven onto by a succession of vehicles to be weighed and releasably accommodating the means to determine a weight of a vehicle in the first surface.

When the vehicle load monitoring apparatus comprises a pair of elongate members disposed substantially parallel to one another, the method preferably comprises of the further step of turning at least one of the pair of components over so that its second surface may be driven onto by a succession of vehicles to be weighed, when a condition of the first surface of the at least one elongate member renders it unsuitable for use.

When the vehicles load monitoring apparatus is a mobile apparatus, the method preferably comprises of the further step of transporting the vehicle load monitoring apparatus to a location at which to weigh a succession of vehicle.

Other are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a perspective view of a weighbridge in use, with a plurality of components according to a first embodiment of the invention, each component having first and second surfaces.
Figure 2 shows perspective and section views of one of the components shown in Figure 1, represented in isolation of the weighbridge.
Figure 3 shows perspective and section views of a component according to a second embodiment of the invention, suitable for use with the weighbridge of Figure 1.
Figure 4 shows perspective and section views of a component according to a third embodiment of the invention, suitable for use with the weighbridge of Figure 1.
Figure 5 shows perspective and section views of a component according to a fourth embodiment of the invention.
Figure 6 is a perspective view of a component according to a fifth embodiment of the invention, configured to releasably accommodate one or more safety barriers.
Figure 7 is a perspective view of a component according to a sixth embodiment of the invention, configured to releasably accommodate one or more wheel tracking aids.
Figure 8 is a perspective view of a component according to a seventh embodiment of the invention, wherein each surface is further configured with means to improve grip of the one or more wheels.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

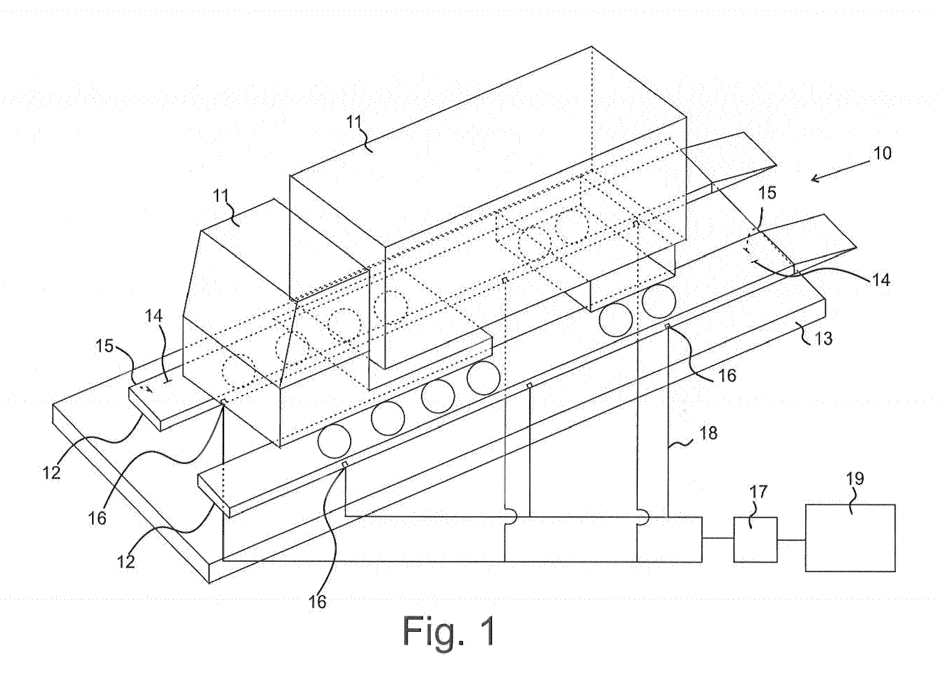

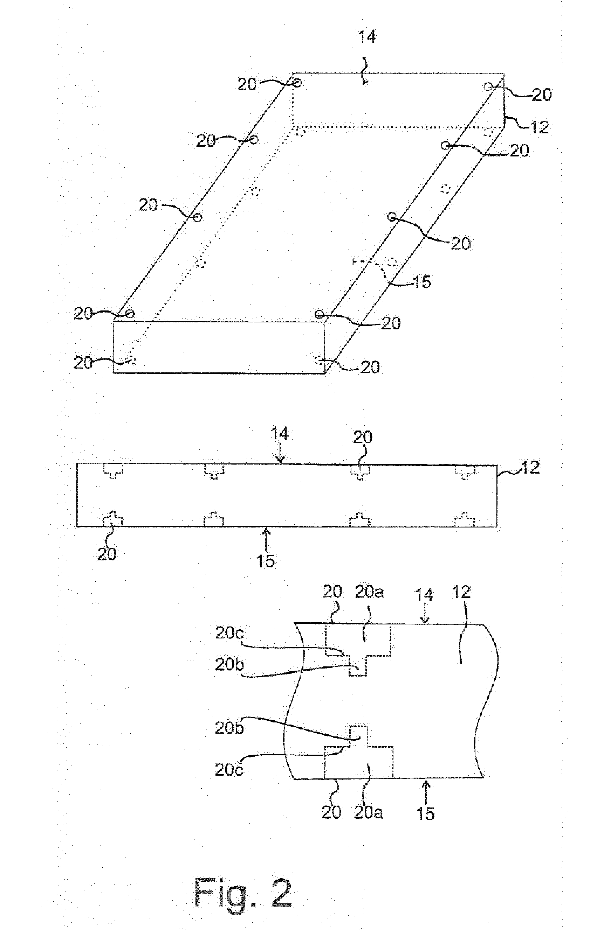

With reference to Figures 1 and 2, a vehicle load monitoring apparatus 10 is shown which, in the example, is a static weighbridge 10. The weighbridge 10 comprises a weighing surface onto which goods vehicles 11 may driven for weighing purposes. The weighing surface comprises two components 12 according to a first embodiment of the invention, which are disposed over a base 13 and parallel to one another, with a dividing void therebetween.

Each of the two components 12 is an elongate member having a first surface 14 for supporting half of the vehicle wheels, on one side of the vehicle 11, such that the vehicle 11 is driven onto the weighing surface and substantially centered relative to the void between the two parallel components 12. The weight of the goods vehicle 11 is therefore evenly distributed across the pair of first surfaces 14 constituting the weighing surface of the weighbridge 10.

Each of the two components 12 has a substantially oblong shape and has a second surface 15, parallel to its first surface 14 and opposed thereto, thus facing the base 13 of the weighbridge 10. The second surface 15 is substantially identical to the first surface 14 and is therefore again suitable for supporting half of the vehicle wheels, on one side of the vehicle 11, when the component 12 is turned over.

Each surface 14, 15 of each component 12 is configured to releasably accommodate means to determine a weight of a vehicle. In the example, the weight determining means is a plurality of load cells 16 secured to the base 13 of the apparatus 10 onto which the components 12 are disposed for use. The load cells 16 are connected to a junction box 17 by means of a signal cable 18. The junction box 17 is connected to a weight indicator 19. A small voltage is sent to the loadcells 16, each of which includes a strain gauge (not shown). The flex of the strain gauge under load modifies the signal which returns to the weight indicator 19 and the corresponding difference in voltage is measured by the weight indicator 19, whereby the weight measure is obtained and displayed and/or recorded, according to techniques well known to the skilled person. It will be readily understood by the skilled person that the use of load cells 16 is described herein solely by way of example and is not to be construed as a limitation, as the component of the invention is suitable for use with many other types of weight determining means.

Accordingly, in the example shown, each surface 14, 15 is configured with a plurality of apertures or bores 20, each having a dimension suitable for accommodating a load cell 16 therein. Each aperture 20 is located substantially adjacent the periphery of the surface 14, 15, and comprises two concentric sections 20a, 20b having different, respective bore diameters. The first section 20a nearest the surface 14. 15 has a larger diameter for accommodating the load cell 16, The second section 20b is co-axial with the first section 20a and extends into the component from the extremity 20c of the first section distal the surface 14, 15. The second section 20b has a narrower diameter than the first section 20a and is configured as a bolthole. In use, the component is disposed over the base 13 so that each load cell 16 is located in a corresponding first section 20a and releasably secured in the aperture 20 with a bolt threaded into the second section 20b.

In use, each component 12 is disposed so that its first surface 14 may be driven onto by vehicles 11 to be weighed, and so that its second surface 15 accommodates the load cells 16 in its apertures 20. When a condition of a first surface 14 renders at least one of the components 12 unsuitable for use, for instance after the wheels of a number of vehicles 11 have eroded a substantially central longitudinal portion of the first surface 14 over time through use, the load cells are uncoupled from the apertures 20 of the second surface 15 and the load component 12 is lifted from its position and turned over. The component 12 is then again disposed so that its second, unused surface 15 may be driven onto by vehicles 11 to be weighed and so that its first surface 14 accommodates the load cells 16 in its apertures 20. It will be readily understood by the skilled person that the use of apertures 20 is described herein solely by way of example in connection with the example use of load cells, and is not to be construed as a limitation. The component of the invention is suitable for use with many other types of weight determining means, each of which may require an specific configuration of the surfaces 14, 15 of a component 12.

Each component 12 is made of steel, concrete, or steer - reinforced concrete, as these materials are known to be particularly resilient to long - term damage in vehicle weighing applications. The component can be made according to material casting techniques well known to the skilled person.

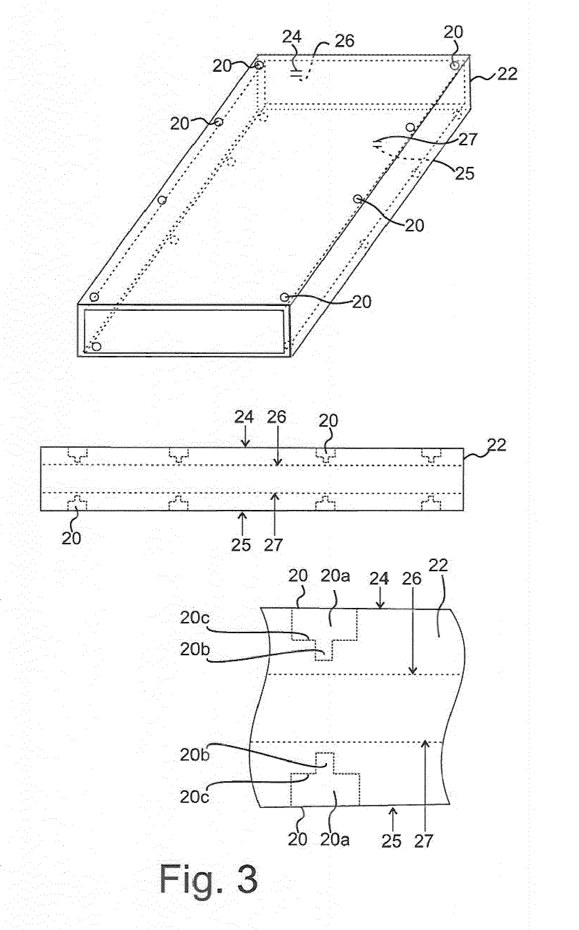

For mobile weighbridges, a solid steel or concrete component 12 can prove difficult to locate in use, even before one of its surfaces 14, 15 becomes unsuitable for use, due to its size and weight. Accordingly, another embodiment of a component according to the invention is shown in Figure 3. The component 22 is essentially similar to the component 12 of Figure 2 in that it is an oblong elongate member having first and second surfaces 24, 25 for supporting the wheels of a vehicle 11, wherein the first and second surfaces 24, 25 are substantially opposed and parallel to one another and each surface comprises a plurality of apertures 20 about at least a portion of its periphery.

The component 22 differs from the component 12 in that it is substantially hollow, having an open transversal section wherein the respective wall depth 30 extending between each of the first and second external surfaces 24, 25 and their respective opposed internal surfaces 26, 27 is sufficient to accommodate the first and second sections 20a, 20b of each aperture 20. The hollow component 22 therefore achieves a substantial weight saving relative to the solid components 12 and is easier to locate in use.

For very large static weighbridges 10, for instance of the type used to weigh ore haul trucks in opencast mines, the size and weight capacity requirements of the weighing surface can precede the use of both solid and hollow components 12, 22. A solid steel or concrete component 12 can prove difficult to turn over when the first surface 14 becomes unsuitable for use, due to its size and weight. A hollow steel or concrete component 22 may fail prematurely, due to the structural integrity limits of its material of construction.

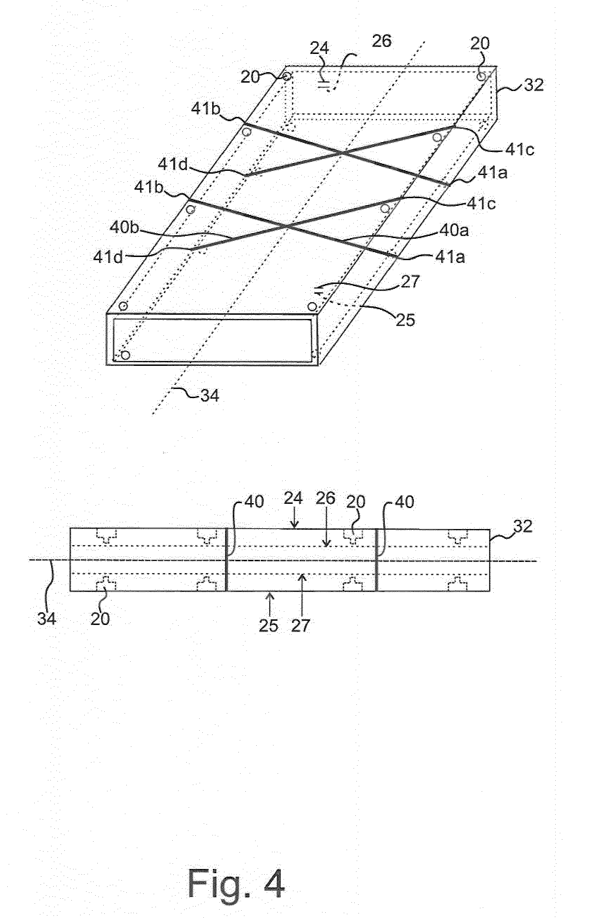

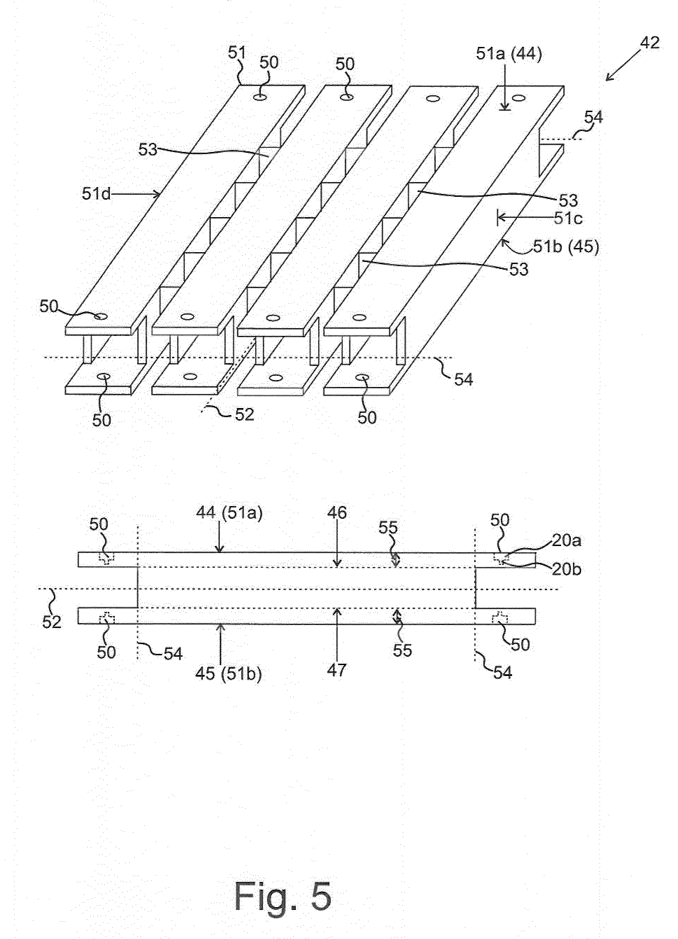

Accordingly, other embodiments of components according to the invention are respectively shown in Figures 4 and 5. With reference to Figure 4 firstly, an alternative component 32 is essentially similar to the components 12, 22 of, respectively, Figures 2 and 3 in that it is an oblong elongate member having first and second surfaces 34, 35 for supporting the wheels of a vehicle 11, wherein the first and second surfaces 34, 35 are substantially opposed and parallel to one another, and each surface comprises a plurality of apertures 20 about at lease a portion of its periphery.

The component 32 is substantially hollow like the component 22, having an open transversal section wherein the respective wall depth 30 extending between each of the first and second external surfaces 34, 35 and their respective opposed internal surfaces 36, 37 is sufficient to accommodate the first and second sections 20a, 20b of each aperture 20. The hollow component 22 therefore achieves a substantial weight saving relative to the solid component 12 and is easier to locate in use.

The component 32 differs from the component 22 of Figure 2 in that it incorporates a plurality of bracing structures 40 disposed to provide equal weight loading capacity for each surface 34, 35. In the example, the bracing structures comprises two cross - bracing members 40, which are disposed within the volume of the hollow component 32 so as to provide equal weight distribution relative to the longitudinal and transversal axes of the component.

The cross - bracing members 40 are disposed equidistantly, between the longitudinal extremities of the component 32 and relative to the transversal axis 33 of the component 32. Each cross - bracing member 40 comprises a pair of strut members 40a, 40b arranged to cross one another at a position substantially along the longitudinal axis 34 of the component 32, and disposed so as to form a plane substantially perpendicular to both component surfaces 34, 35. Each extremity of the strut members 40a, 40b braces a respective corner 41a, 41b, 41c, 41d of the oblong open transversal section of the component 32. The hollow component 32 therefore maintains the advantage of a substantial weight saving relative to a solid component 12, but has an improved structural integrity relative to, and is therefore apt to support heavier loads than, the substantially hollow component 22.

With reference to Figure 5 now, an alternative component 42 is essentially similar to the components 12, 22 and 32 of, respectively, Figures 2, 3 and 4 in that it is an oblong elongate member having first and second surfaces 44, 45 for supporting the wheels of a vehicle 11, wherein the first and second surfaces 44, 45 are substantially opposed and parallel to one another. Each surface 44, 45 is configured to releasably accommodate means to determine a weight of a vehicle and, in this embodiment, comprises a plurality of eyelets 50 extending from portions of its periphery corresponding to the opposed, longitudinal extremities of the component 42.

The component 42 is substantially hollow like the components 22, 32, having an open transversal oblong section made of a plurality of substantial square - shaped steel beams 51 disposed parallel to one another along the longitudinal axis 52 of the component 42. The steel beams are braced apart from one another by interstitial bracing members 53 and securely fastened to one another to form a unitary structure.

As the beams 51 are substantially square - shaped, at least two opposed and parallel sides 51a, 51b of each beam 51 form respective portions of the external surfaces 44, 45 of the component 42. Each eyelet 50 extends from the extremity of each beam side 51a, 51b forming a respective portion of the component surfaces 44, 45, such that it projects beyond a transversal extremity 54 of the unitary structure of the component 42. The wall depth 55 extending between each of the first and second external surfaces 44, 45 and their respective opposed internal surfaces 46, 47, corresponding to the wall depth of each eyelet 50, is sufficient to accommodate the first and second sections 20a, 20b. The hollow component 22 therefore achieves a substantial weight saving relative to the solid component 12 and is easier to locate in use.

As the beams 51 are substantially square - shaped and disposed longitudinally, along the direction of travel of goods vehicles 11, the remaining opposed and parallel sides 51c, 51d of each beam 51 form a plurality of bracing structures 40 disposed to provide both equal weight loading capacity for each surface 44, 45 and equal weight distribution relative to the longitudinal and transversal axes of the component. Thus, like the hollow component 32 of Figure 4, the hollow component 42 maintains the advantage of a substantial weight saving relative to a solid component 12, but has an improved structural integrity relative to, and is therefore apt to support heavier loads than, the substantially hollow component 22.

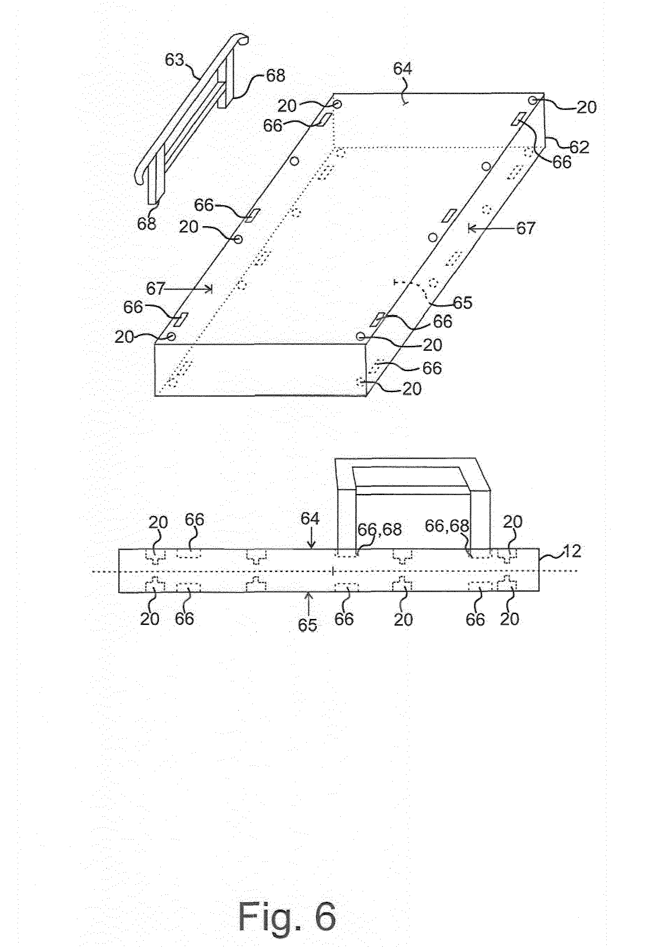

Figure 6 is a perspective view of a component 62 according to a fifth embodiment of the invention, configured to releasably accommodate one or more safety barriers 63. The component 62 is essentially similar to any one of the components 12, 22, 32 and 42 previously described, in that it is an oblong elongate member having first and second surfaces 64, 65 for supporting the wheels of a vehicle 11, wherein the first and second surfaces 64, 65 are substantially opposed and parallel to one another and each surface 64, 65 is configured to releasably accommodate means to determine a weight of a vehicle. However, each surface 64, 65 of the component 62 comprises additional apertures or bores 66 adjacent the outer lateral side 67 of the component 62, wherein each aperture is engaged, in use, by a protruding engagement member 68 of a safety barrier 63 or portion thereof.

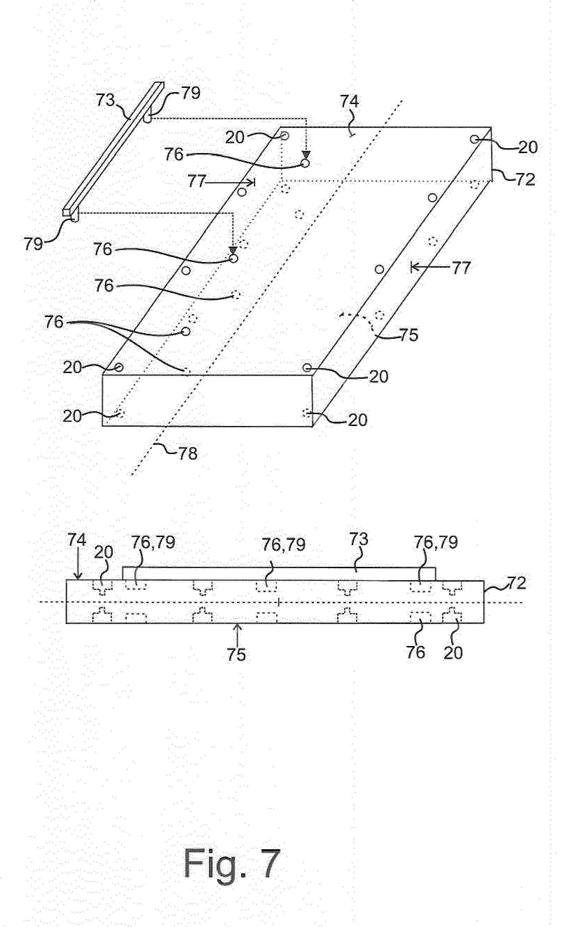

Figure 7 is a perspective view of a component 72 according to a sixth embodiment of the invention, configured to releasably accommodate one or more wheel tracking aids 73. The component 72 is essentially similar to any one of the components 12, 22, 32, 42 and 62 previously described, in that it is an oblong elongate member having first and second surfaces 74, 75 for supporting the wheels of a vehicle 11, wherein the first and second surfaces 74, 75 are substantially opposed and parallel to one another and each surface 74, 75 is configured to releasably accommodate means to determine a weight of a vehicle. However, each surface 74, 75 of the component 72 comprises additional apertures or bores 76 located between at least one lateral side 77 of the component and the longitudinal axis 78 of the surface 74, 75. In use, each aperture 76 is engaged by a protruding engagement member 79 of a track member 73.

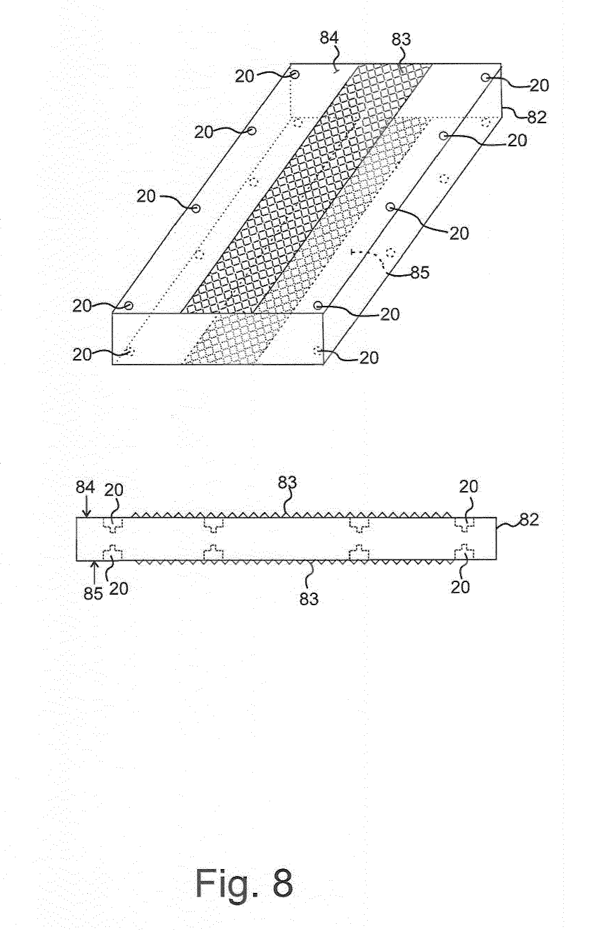

Figure 8 is a perspective view of a component 82 according to a seventh embodiment of the invention, wherein each surface is further configured with means 83 to improve grip of the one or more wheels. The component 82 is essentially similar to any one of the components 12, 22, 32, 42, 62 and 72 previously described, in that it is an oblong elongate member having first and second surfaces 84, 85 for supporting the wheels of a vehicle 11, wherein the first and second surfaces 84, 85 are substantially opposed and parallel to one another and each surface 84, 85 is configured to releasably accommodate means to determine a weight of a vehicle. However, each surface 84, 85 of the component 82 further comprises a plurality of tread members 83 arranged as a pattern across at least a portion of the surface 84, 85.

In the specification the terms "comprise, comprises, comprised and comprising" or any variation thereof and the terms include, includes, included and including" or any variation thereof are considered to be totally interchangeable and they should all be afforded the widest possible interpretation and vice versa.

## Claims

1. A component for a vehicles load monitoring apparatus, comprising
at least one elongate member having a first surface for supporting one or more wheels of a vehicles to be weighed and configured to releasably accommodate means to determine a weight of a vehicle,
wherein the or each elongate member has a second surface substantially parallel and opposed to the first surface, for supporting the one or more wheels of a vehicle to be weighed and configured to releasably accommodate the means to determine a weight of a vehicle.

2. A component according to claim 1, wherein the elongate member is substantially oblong.

3. A component according to claim 1 or 2, wherein the elongate member is substantially hollow and further comprises a plurality of bracing structures disposed to provide equal weight loading capacity for either surface.

4. A component according to claim 3, wherein the bracing structures are further disposed to provide equal weight distribution relative to the longitudinal and transversal axes of the component.

5. A component according to any of claims 1 to 4, wherein the means to determine a weight is a plurality of load cells.

6. A component according to claim 5, wherein each surface is configured with a plurality of apertures, each for accommodating a respective load cell, each load cell being releasably secured in the aperture with a fastener.

7. A component according to claim 6, wherein each aperture is a bolthole and each fastener is a bolt.

8. A component according to any of claims 1 to 7, further configured to releasably accommodate one or more safety barriers.

9. A component according to any of claims 1 to 8, wherein each surface is further configured to releasably accommodate one or more wheel tracking aids.

10. A component according to any of claims 1 to 9, wherein each surface is further configured with means to improve grip of the one or more wheels.

11. A component according to any of claims 1 to 10, wherein the component made of a material selected from the group comprising steel, concrete, steel - reinforced concrete and composite materials.

12. A component according to any of claims 1 to 11, wherein the vehicle load monitoring apparatus is a weighbridge selected from the group comprising static, mobile, surface - mounted and pit - mounted weighbridges.

13. A vehicle load monitoring apparatus comprising at least one component according to any of claims 1 to 12.

14. A method of using a vehicles load monitoring apparatus comprising at least one component having first and second surfaces, each surface for supporting one or more wheels of a vehicle to be weighed and configured to releasably accommodate means to determine a weight of a vehicle and both surfaces being substantially parallel and opposed to one another, comprising the steps of:
disposing the at least one component so that its first surface may be driven onto by vehicles to be weighed and so that its second surface accommodates the weight determining means; and
when a condition of the first surface renders it unsuitable for use, turning the component over so disposing so that its second surface may be driven onto by vehicles to be weighed and so that its first surface accommodates the weight determining means.

15. A method according to claim 14, wherein the vehicles load monitoring apparatus comprises at least two components disposed substantially parallel to one another, whereby the step of turning over comprises the further step of turning at least one component over.

16. A method according to claim 14 or 15, wherein the vehicle load monitoring apparatus is a mobile apparatus, whereby the method comprises of the further step of transporting the vehicle load monitoring apparatus to a location at which to weigh vehicles.
